# EUROPEAN PATENT APPLICATION

(11) **EP 1 118 952 A2**
(43) Date of publication of application: **25.07.2001**
(21) Application number: 01100685.5
(22) Date of filing: 11.01.2001
(51) Int. Cl.: G06F 17/60, G06F 9/44

(54) **System, method and computer program product for providing a remote support service**

(30) Priority: 11.01.2000 EP 00100505
(71) Applicant: Hewlett-Packard Company, Palo Alto, California 94304-1112 (US)
(72) Inventor: Ulmer, Friedemann, 71131 Jettingen (DE); Lange, Manfred, 71131 Jettingen (DE); Trenz, Thomas, 72218 Gültlingen (DE)
(74) Representative: Lippich, Wolfgang, Dipl.-Pys., Dr.rer.nat.

(57) **Abstract**

The invention is directed to a system for providing a remote support service between at least one support-service provider's site and a customer's site having a customer's information technological (IT) infrastructure, comprising: an information collecting component which collects information about the customer's IT infrastructure; a storage component which stores collected information according to a data model modeling at least part of the customer's IT infrastructure; an information-transferring component capable of transferring at least part of the collected or stored information or a representation of it to the support-service provider; and an analysis component which analyzes the stored or transferred information or representation as a basis for the provision of the remote support services. The invention is also directed to a corresponding method and computer program product.

## Description

### FIELD OF THE INVENTION

The present invention relates generally to information technological (IT) infrastructure support, and more particularly to a system and a method for providing a remote support service between at least one support-service provider's site and a customer's site having a customer's IT infrastructure. The invention relates also to a computer system forming a customer based part of a system for providing a remote support service and a corresponding computer program product.

### BACKGROUND OF THE INVENTION

For most companies the network (Internet or intranet) is the most critical and often the most complicated element of their entire IT infrastructure. Proprietary or customized networks therefore have to be maintained by way of support services in order to maximize return on investment. These support services are delivered by technical specialists, either locally or remotely.

For support services to a local area network (LAN), there are network management systems available which provide detailed LAN health checks utilizing passive monitoring probes. Full analysis and any errors or capacity problems identified are documented in a report. They further provide remote LAN monitoring by a remote log-in via a network or an ISDN connection. Monthly reports can detail utilization errors and protocol use. A recommendation on solutions to any problems identified may be included in the report. In addition, the service can include alarm recording and problem diagnosis.

The present applicant offers an enterprise-oriented Network Node Manager (OpenView™) which has a Web interface. In particular, a Web browser is shipped together with the OpenView™ Professional Suite, which is a comprehensive software solution that allows customers in small to midsize networked environments to manage virtually all elements of a LAN. Thus the OpenView™ Professional Suite combines the power of a central management console with the ease of using the Web for communication.

Network management of a TCP/IP network comprises network management stations (managers) communicating with network elements. The network elements can be anything that runs the TCP/IP protocol suite: hosts, routers, terminal servers, etc. (Regarding the meaning of the term "TCP/IP protocol suite", see W. Richard Stevens: TCP/IP Illustrated, Volume 1, The Protocols, 1994, pages 1-2). The protocol for the communication between the manager and the elements provided by the TCP/IP protocol suite is the Simple Network Management Protocol (SNMP). It allows a two-way communication: a manager can ask an element for a specific value, or the element can tell the manager that something happened. Also, the manager is able to set variables in the element, in addition to reading variables from it. A description of SNMP can, for example, be found in Stevens, pages 359-388.

Another standard for network management is what is called Desktop Management Interface (DMI). It has been defined by the Distributed Management Task Force (DMTF). DMI is a standard framework for managing and tracking components in a desktop personal computer, notebook or server (see http://www.dmtf. org/spec/dmis.html).

An emerging standard for the management of operating systems and applications is the Web-Based Enterprise Management (WBEM). WBEM is a set of management tools using emerging technologies such as CIM and XML. In particular, WBEM is a set of the following technologies: "CIM Schema v 2.2", "CIM operations over HTTP", and "XML encodings for CIM" (see http://www.dmtf.org/wbem/index.html). CIM stands for Common Information Model and is a data model for describing information for the management of enterprise computing environments. XML stands for Extensible Markup Language and is a standard which can be used for exchanging massages between different applications (see http://www.w3.org/tr/rec-xml).

### SUMMARY OF THE INVENTION

A system for providing a remote support service between at least one support-service provider's site and a customer's site having a customer's IT infrastructure, comprises: an information collecting component which collects information about the customer's IT infrastructure; a storage component which stores collected information according to a data model modeling at least part of the customer's IT infrastructure; an information-transferring component capable of transferring at least part of the collected or stored information or a representation of it to the support-service provider; and an analysis component which analyzes the stored or transferred information or representation as a basis for the provision of the remote support services.

According to another aspect, the invention provides a computer system forming a customer based part of a system for providing a remote support service between at least one support-service provider's site and the customer's site having a customer's IT infrastructure. The computer system comprises: an information collecting component which collects information about the customer's IT infrastructure; a storage component which stores collected information according to a data model modeling at least part of the customer's IT infrastructure; and an information-transferring component capable of transferring at least part of the collected or stored information or of a consolidated representation of it to the support-service provider.

According to still another aspect, the invention is directed to a computer program product including program code for execution on a customer-based computer system which is part of a system for providing a remote support service between at least one support-service provider's site and the customer's site having a customer's IT infrastructure. The program code comprises the software parts of: an information collecting component which collects information about the customer's IT infrastructure; a storage component which stores collected information according to a data model modeling at least part of the customer's IT infrastructure; an information-transferring component capable of transferring at least part of the collected or stored information or of a consolidated representation of it to the support-service provider.

According to yet another aspect, the invention is directed to a method for providing a remote support service between at least one support-service provider's site and a customer's site having a customer's IT infrastructure. The method comprises the steps of: collecting information about the customer's IT infrastructure; storing collected information according to a data model modeling at least part of the customer's IT infrastructure; transferring at least part of the collected or stored information or a representation of it to the support-service provider; and analyzing the stored or transferred information or representation as a basis for the provision of the remote support services.

Other features are inherent in the disclosed system, computer program product and method or will become apparent to those skilled in the art from the following detailed description of embodiments and its accompanying drawings.

### DESCRIPTION OF THE DRAWINGS

In the accompanying drawings:
- Fig. 1: shows an architectural overview of a preferred embodiment;
- Fig. 2: shows an architectural representation of parts of an infrastructure documentation tool of Fig. 1;
- Fig. 3: shows a more detailed functional architecture of a data collector ;
- Fig. 4: shows a more detailed functional architecture of a collection configuration component;
- Fig. 5: shows a more detailed functional architecture of a transport office manager;
- Fig. 6: illustrates a distributed application stack of a customer's IT infrastructure;
- Fig. 7: shows a graphical representation of an instance of a data model modeling a customer's IT infrastructure;
- Fig. 8: illustrates a data model of a network node;
- Fig. 9: illustrates a data model of a computer system;
- Fig. 10: illustrates a data model of a storage system;
- Fig. 11: illustrates the inheritance of the data models of Figs. 8 to 10 from more general classes;
- Fig. 12: illustrates how an element of the IT infrastructure is mapped to a class with dynamic attributes;
- Fig. 13: is a table illustrating the concept of meta classes for achieving dynamic extensibility of the data model;;
- Fig. 14: shows a flow diagram of a remote support-service method;
- Fig. 15: illustrates an embodiment wherein the support service is provided by several co-operating sub-services;
- Fig. 16: illustrates a collection task;
- Fig. 17: illustrates a scheduling task;
- Fig. 18: shows collectible interfaces;
- Fig. 19a-c: show further interfaces; and
- Fig. 20: illustrates a DMI collection task.

### DESCRIPTION OF THE PREFERRED EMBODIMENTS

Features that are substantially or functionally equal or similar will be referred to with the same reference sign(s).

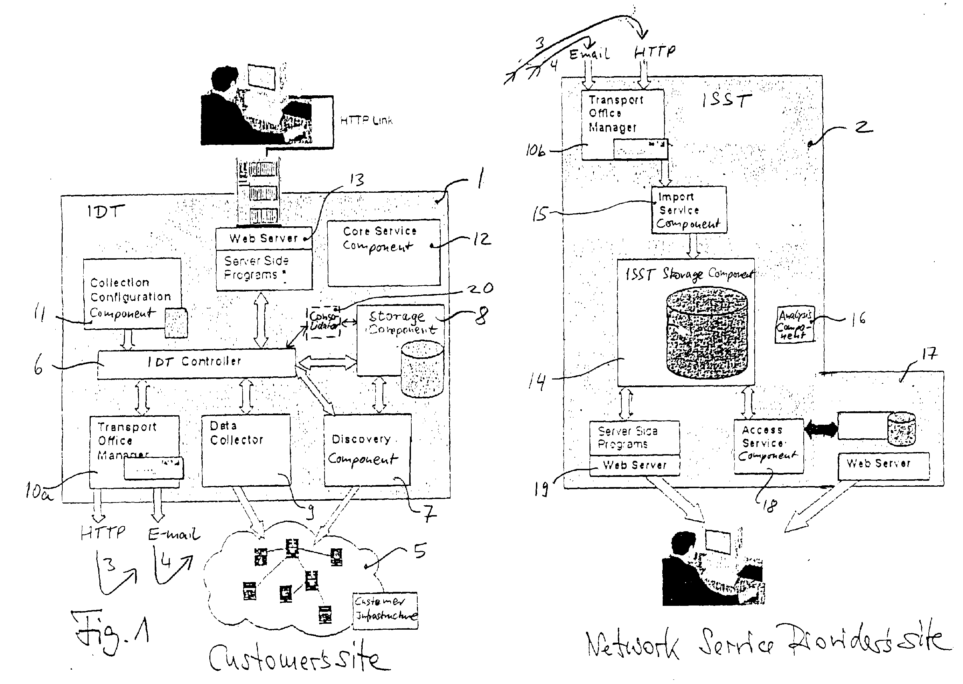

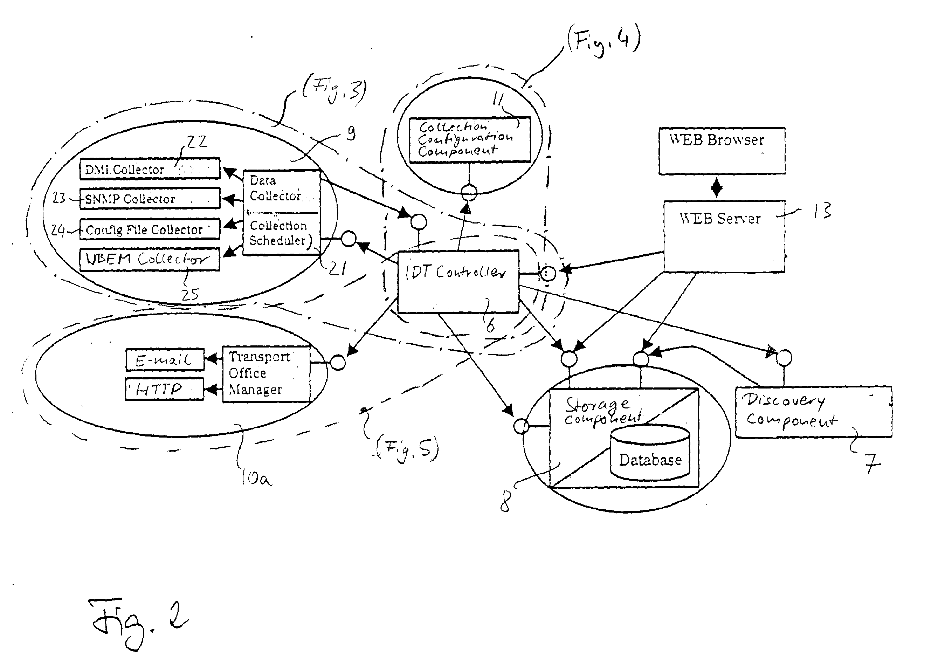

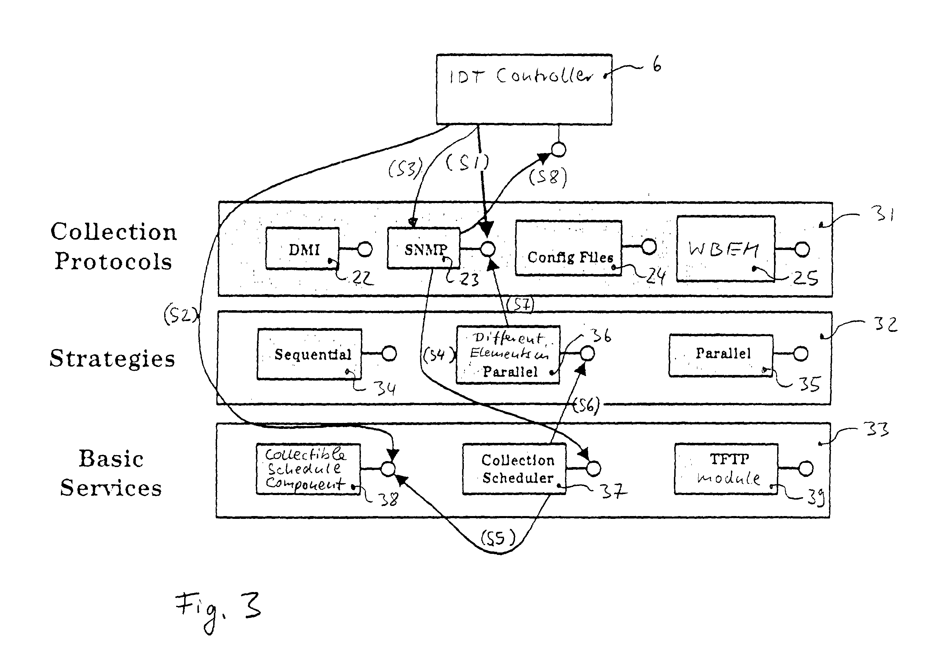

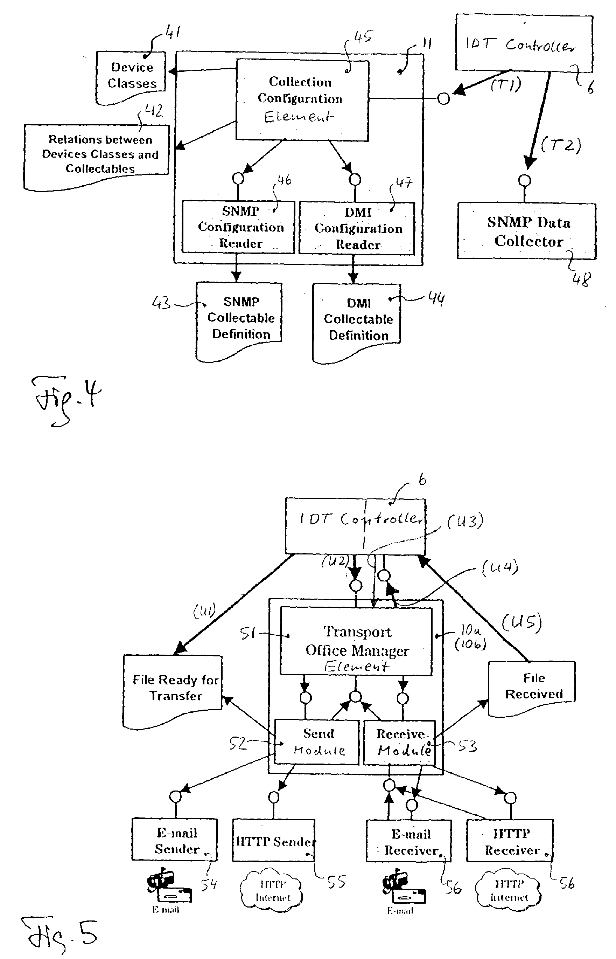

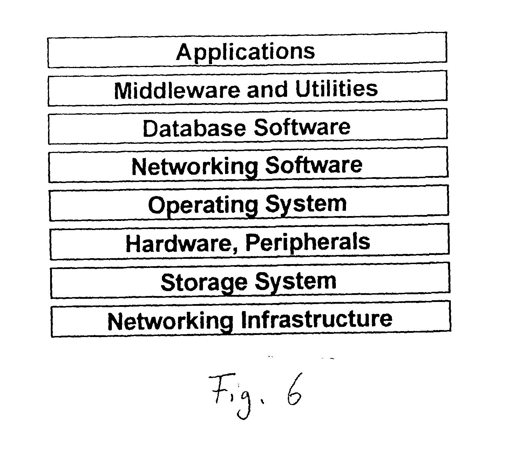

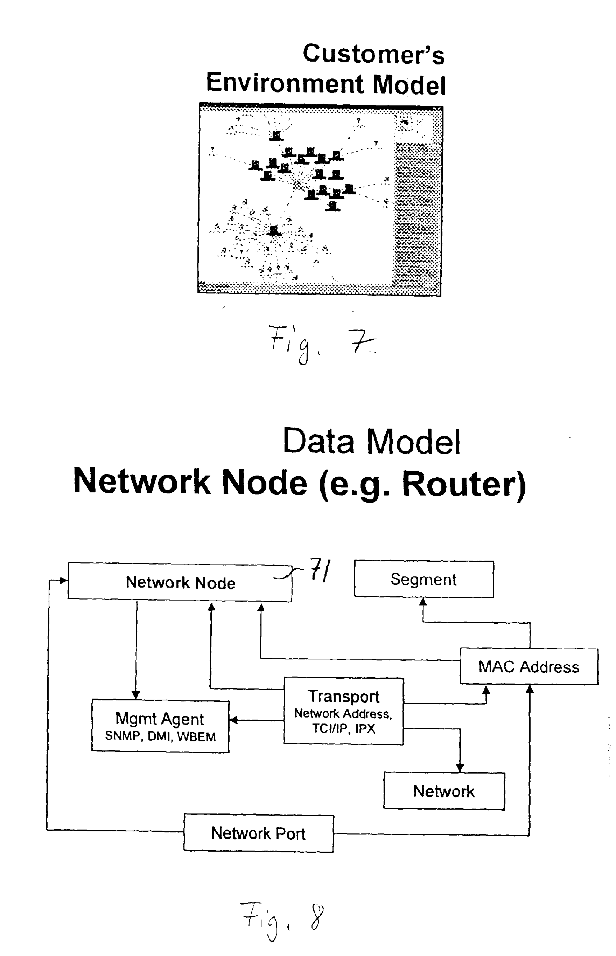

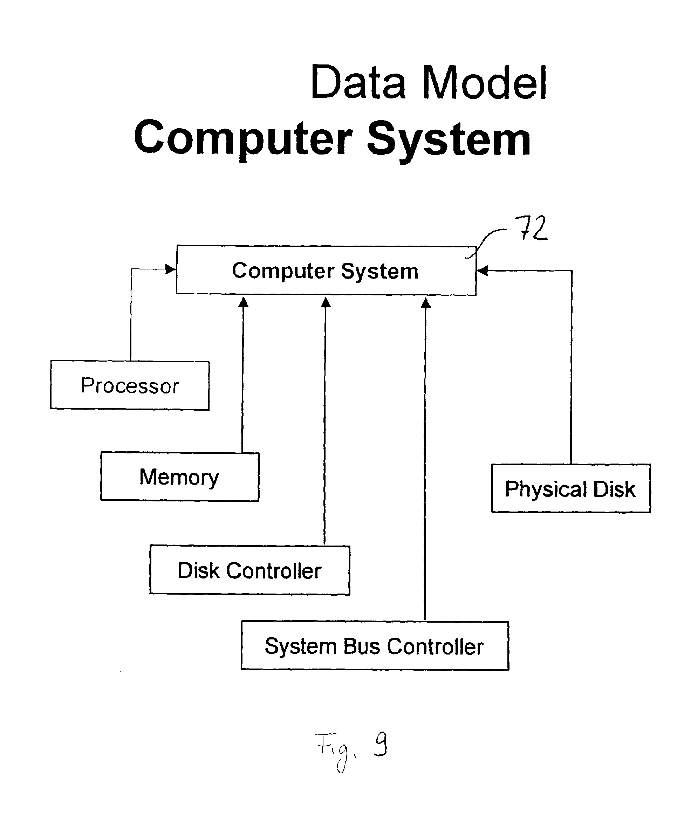

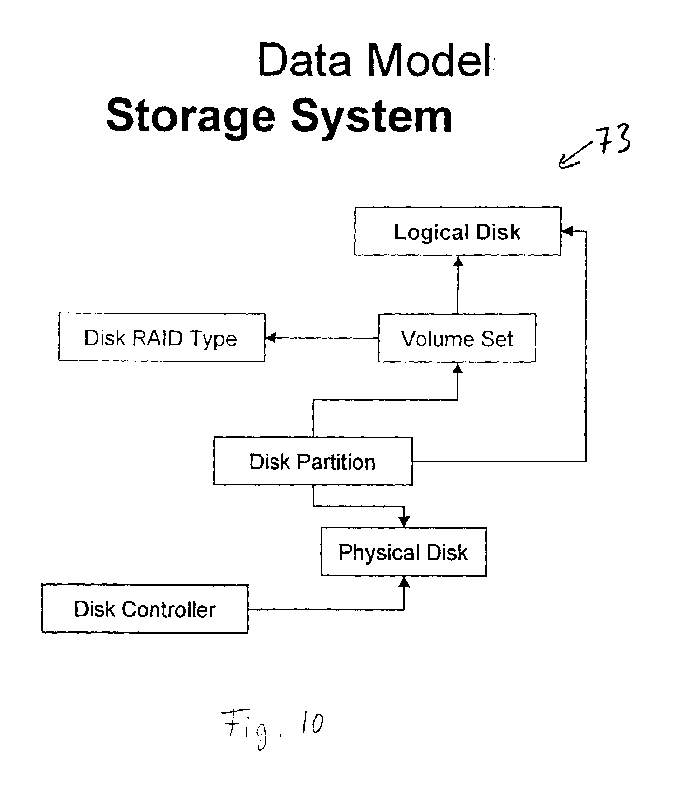

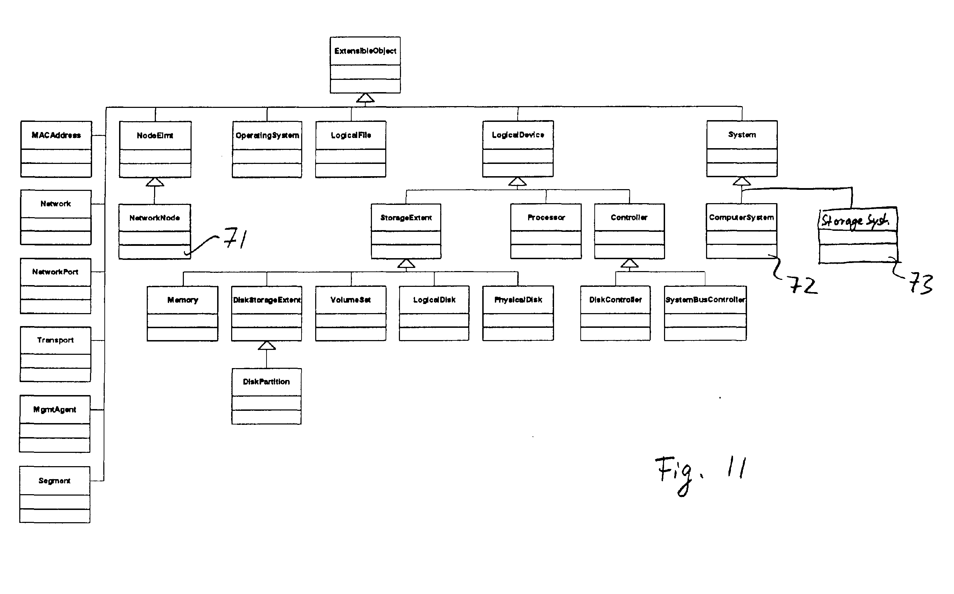

Figure 1 shows an architectural overview of a preferred embodiment. Before proceeding further with the description, however, a few items of the preferred embodiments will be discussed.

The preferred embodiments of the system allow for an automatic capture of configuration and performance information of the customer's IT infrastructure via a data collection mechanism which is independent of hardware devices. The process runs as a background task. The collected information is stored in a storage component according to a data model which models at least part of the entire IT infrastructure which includes, but is not limited to network interconnect hardware and related software. Preferably, the data model models the whole infrastructure. Based on that data model, an analysis component, located at the service provider's site and/or the customer's site analyzes the collected or stored information or a representation of it.

In the preferred embodiments, a storage component is located at the customer's site since access to the customer's site from outside is normally restricted or excluded due to security requirements. In addition, there is another storage component located at the provider's site. In other embodiments, the storage component storing collected data according to the data model is only located at one of the sites, either the support-service provider's site or the customer's site.

In the preferred embodiments, the analysis component is located at the support-service provider's site; i.e. the stored data or an extract of them are transmitted to the support-service provider's site and are analyzed there. The analysis can be individually tailored to the customer, depending on the particular support contract between customer and provider. The support-service provider receives data from the customer, preferably via the Internet using e-mail, HTTP or a point-to-point Internet connection, performs the diagnosis and sends a report or message back to the customer, again via the Internet for example by sending XML. However, it is likewise possible that the analysis component is located at the customer's site and the analysis is being done there. Then, the results of the analysis are transferred to the service provider's site, where the support-service server can, for example, automatically arrange for service personnel to be sent to the customer, if the result indicates a fault condition. Further, it is possible that a customer is linked to several co-operating support-service providers and transfers data to them. For example, each provider could be responsible only for certain IT infrastructure elements (for example, for certain hardware devices). There could also be a hierarchical structure of support-service providers in the sense that there are several sub-providers (responsible only for providing support for certain parts of the IT infrastructure) and one master provider (responsible for providing an overall support).

If the bandwidth of the network link(s) between the customer and the service provider(s) is limited, it may be advantageous to consolidate the data before they are transferred to the provider. If bandwidth limitations are not relevant, a consolidation can likewise be performed at the provider. It is also possible to perform consolidation actions at both sites. Consolidating means compressing data, e.g. by filtering or condensing them or by detecting certain events.

The customer's IT infrastructure that can be discovered, monitored and analyzed by the disclosed embodiments is not restricted to hardware. Rather, it may comprise one or more of the following elements: network infrastructure elements, storage systems, hardware elements and peripherals, operating systems, networking software, database software, middleware and utilities, software applications. The information collecting component collects information about at least one of these elements and the data model models at least part of these elements and their inter-relations.

The preferred embodiments of the system further comprise a discovery component which is capable of automatically discovering changes in the customer's IT infrastructure. There are many sources of ongoing changes in an IT infrastructure, for example: Failure of infrastructure elements, fixing of failed infrastructure elements, extensions and enhancements of the infrastructure, user process changes, application changes, interface changes, installation or activation of new applications and software modules, version upgrades, inclusion of new organization units, etc. The data model is automatically adapted so that it models the changed IT infrastructure. Owing to the automatic discovering capability of the discovery component, after an installation of a program code representing the software part of the system at the customer's site, the system can automatically discover at least part of the customer's IT infrastructure and automatically and dynamically generate and stores data which represent it.

In order to allow this dynamic generation and modification in the preferred embodiments, the elements of the customer's IT infrastructure are mapped to classes of an object-oriented programming language (i.e., they become instances of those classes), and new classes (instances) can dynamically be added. The classes have flexible attributes which can dynamically be added and changed during the execution of the program. This is advantageous for the system's capability to automatically adapt itself to changes in the IT infrastructure.

In a preferred embodiment, the information-transferring component comprises transport managing means whereby the collected configuration information is transferred via an information network, particularly the Internet, or by means of a data carrier. An IT infrastructure support service can therefore be handled as an electronic service as part of electronic commerce and business. The proposed web-based approach facilitates the provision compatibility, platform-independence and high accessibility.

As already mentioned above, a scaleable storage component, in particular an object-oriented database is provided. Using a scaleable database allows an unlimited growth of the IT infrastructure.

The storage component may be capable of storing performance history information for the IT infrastructure. This facilitates the monitoring and/or analyzing of the IT infrastructure and the assessment whether the infrastructure performance can be enhanced through updates of the infrastructure hardware and software. Further, history information allows improved diagnosis and performance checks. The configuration, configuration changes, performance and/or performance changes of the customer's IT infrastructure are automatically monitored and analyzed particularly based on rules. Such rules define what checks and configuration test are to be performed are to be performed in an infrastructure element of a particular type. The rule are not "hard coded". Rather they can be input as ASCII strings and are interpreted (similar to a script language such as VisualBasic Script). Additionally it is possible with the preferred embodiments to monitor infrastructure health, including but not limited to, trend analysis, forecasts, traffic assessment and problem prediction.

In the preferred embodiments, a scheduler for scheduling the collection of the infrastructure information is provided. The scheduler determines when a collection task is be carried out.

The preferred embodiments of the computer program product comprise program code which, for example, is stored on a computer-readable data carrier or is in the form of signals transmitted over a computer network. The preferred embodiments of the program code are written in an object-oriented programming language (Java or C+ +). Some of the mentioned components have also a hardware part. For example, the storage component comprises a physical storage medium for persistently storing the collected data. It is clear that the computer program product comprises only the software parts of these components.

Returning now to Fig. 1, it shows an architectural overview of preferred embodiment of a computer system for providing a remote support service. The system is subdivided into an Infrastructure Documentation Tool (IDT) 1 at the customer's site and an Infrastructure Support Service Tool (ISST) 2 on the support-service provider's site. The two sites are linked via a network, for example an IP link using HTTP 3, e-mail 4 or a point-to-point Internet connection (not illustrated).

The customer's IT infrastructure generally comprises network infrastructure elements (such as routers and switches), storage systems, hardware elements (such as desk top computers), peripherals (such as printers and scanners). Further, it generally comprises software elements, such as operating systems, networking software, database software, middleware, utilities and software applications. In Fig. 1, the customer's IT infrastructure 5 is visualized as a tree-like structure, but, more generally, it can be a graph-like structure.

The several functional elements of the IDT 1 are controlled by an IDT controller 6,. which is the heart of the IDT 1. It controls a discovery component 7 which runs automatically and periodically as a background task, for example once per day (a component with such a function is also called a "demon"). The discovery component is capable of discovering an appearance, disappearance or a change in infrastructure elements, such as routers, switches, hosts, software applications etc. The discovery component 7 sends requests to (yet unknown) infrastructure elements by using what is called the Ping application (see Stevens, pages 85 to 96). In order to discover unknown infrastructure elements it sends many trial requests with different possible IP addresses, which possibly do not exist in the infrastructure 5. If, by chance, it uses the IP address of the (yet unknown) infrastructure element, this element will respond and disclose its identity in the response. The discovery component 7 uses a network management protocol, such as SNMP, to discover network elements, such as routers. In order to discover software elements, it uses a suitable protocol, such as WBEM.

Ping may not be the optimal solution, if the subnet contains many devices, e.g. when the subnet mask is big, e.g. 255.255.0.0. In this case reading the ARP cache (see Stevens, pages 53 to 64, in particular page 56) is preferred. An ARP cache contains the resolved network addresses of other devices with which a recent communication across the network took place. Best candidates for reading ARP caches are therefore gateways or servers.

The discovery components 7 starts the discovery task "within itself', i. e. on the IDT server computer on which it runs, and first discovers the gateway to the infrastructure 5. Then, it discovers the first node in the infrastructure 5 and receives the requested identity information from it, by means of the above-described method. Then, this node constitutes the starting point for the discovery of the adjacent nodes. If the node is a switch, it provides the discovery component 7 with information as to which device is linked to which port of the switch. If the infrastructure element is a router, the above-described discovery method can be simplified as routers commonly store a list of used IP addresses in their cache. If the discovery component 7 can acquire such a stored list of used IP addresses, it can use them for the further discovery task rather than trying a large number of arbitrary IP addresses.

By this method, the discovery component 7 not only discovers the elements of the infrastructure 5, but also their inter-relations, which define the topology of the infrastructure 5. In Fig. 1 the topology is illustrated as a tree-like structure.

The discovered infrastructure elements and the infrastructure topology are mapped to objects of an object-oriented data model. The objects are persistently stored in an object-oriented database, which forms part of a storage component 8. The schema of the data base (i.e. the data model) can be dynamically modified. Thus, if the discovery component 7 discovers a modification of the infrastructure 5 (e.g. the appearance, disappearance or a change of attributes of an infrastructure element), it is not necessary to create a new database schema. Rather, the database schema already used by the storage component 8 is modified correspondingly, e.g. by dynamically adding or removing an object or changing an object's attributes list.

A data collector 9 collects information about the infrastructure 5 on the basis of the discovered elements and the discovered infrastructure topology. The collected information is mainly configuration and performance information. The collected data are stored in the storage component 8 according to the data model.

An information-transferring component 10a, here denoted as transport office manager, transfers data collected by the data collector 9 and stored in the storage component 8 to the ISST 2 via the HTTP link 3 or the e-mail link 4.

The data collector 9 is configured by a collection configuration component 11. A core service component 12 allows the configuration and debugging of the IDT 1. A web server 13 permits an HTTP access to the IDT 2, for example by an infrastructure administrator or configurator or the support-service provider.

The ISST 2 at the support-service provider's site comprises a transport office manager 10b which is the counterpart of the IDT's transport office manager 10a. It receives the infrastructure collection and topology data sent by the transport office manager 10a. These data are stored in an ISST storage component 14 via an import service component 15. Also in the ISST storage component 14, the data are stored according to the data model.

An analysis component 16 analyses the topology and collected data with regard to the particular support service to be provided to the customer. For example, the analysis component 16 can provide an infrastructure map (i.e. a graphical representation of the infrastructure as illustrated at 5). The collected information may include not only the network configuration, but also software configuration information, such as the version number as well as patch and bug-fix information of installed software (e.g. operating systems, middleware and applications). Thus, the analysis component 16 can monitor the software configuration status. It can also analyze the collected data regarding the performance and health of the infrastructure, and include these results in the graphical infrastructure representation. Personnel from the customer's or the support-service provider's site can access these results via an ISST web server 17 (which includes a web manager) and an access service component 18. The analysis component 16 can also act as an "alarm system" which detects imminent or already existing faults or malfunctions of the infrastructure 5 and notifies the customer correspondingly via the web server 17. Depending on the particular support service to be provided, the analysis component may also initiate the steps which are necessary to remedy or avoid the fault or malfunction, for example by sending corresponding instructions to the customer's network administrator via the web server 17 or by arranging for corresponding measures to be taken by external service personnel.

A further web server 19 is provided at the ISST 2 which allows HTTP access for controlling and configuring the ISST 2.

In the preferred embodiment shown in Fig. 1, the topology data as well as the collected data are stored at the customer's site, since commonly IP access to the customer's infrastructure 5 from outside is restricted by a firewall (not shown). However, in other embodiments (not shown) the discovery and collection data are sent to the ISST 2 without being stored according to the data model at the customer's site. In a further embodiment (not shown) only the information concerning the topology is stored at the customer's site in order to allow a data collection with reduced external access, but the collected information is sent to the ISST 2 without being stored at the customer's site.

In contrast to the above, it is likewise possible to shift more "responsibility" from the support-service provider's site to the customer's site. In particular, if the bandwidth of the link 3, 4 between the IDT 1 and the ISST 2 is limited, it is advantageous to reduce the amount of data to be transferred via this link. Therefore, in a further embodiment a data consolidator 20 (shown with dashed lines in Fig. 1) consolidates (e.g. filters) the collected data. Then, only the consolidated data are sent to the ISST 2. In still further embodiments, the ISD 1 comprises an analysis component (not shown), which already performs the entire topology and collection data analysis or a part of it at the customer's site. Only data which represent the results of the analysis are then sent to the support-service provider. The transferred data may represent a fault message or an alarm which informs the ISST 2 that measures to remedy or avoid the fault situation have to be taken.

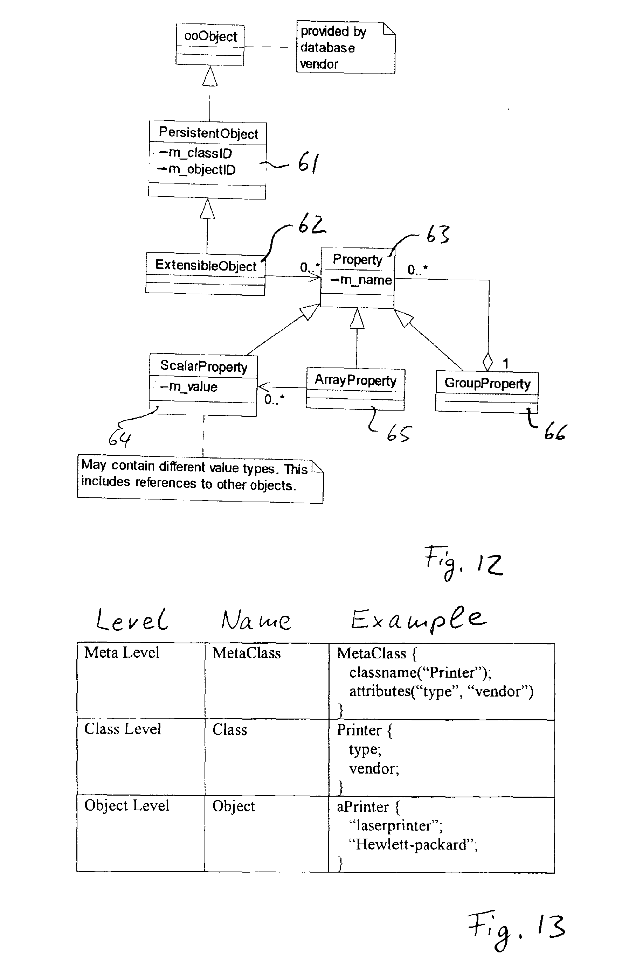

Fig. 2 shows a more detailed architectural representation of a part of the IDT 1 of Fig. 1. The data collector 9 collects configuration and performance information of the IT infrastructure 5 for example data concerning network interconnecting devices (such as routers, switches) and software components (such as operating systems, middleware and applications). The data collector 9 comprises a collection scheduler 21 and several sub-collectors for the different collection protocols: a DMI collector 22 and a SNMP collector 23 collect information about network devices, such as routers, switches and hosts. A configuration file collector 24 collects data from configuration files of devices. A WBEM collector 25 collects information about software components.

The data collector 9 provides for the following functional options:
- Collection on demand (immediate and synchronous, collection);
- Collection according to a schedule on a regular (e.g. periodic) basis.
Particularly, it can run as a background task.

Interfaces provided by the collection configuration component 11 which can be accessed e.g. by a user or infrastructure support manager via the Web server 13 (Fig. 1 ) are,
1. as part of the specification of collection tasks:
   - the definition of what shall be collected (definition of a "collectable");
   - which device identification shall be used;
   - specification of schedules per collectible;
   - how or where to deliver the result;
2. the initiation of a data-collection procedure (if the collection is to be carried out on demand).

The following figures 3, 4 and 5 show the collector component 9 the collection configuration component 11, and the transport office manager 10a together with the IDT controller 6, in more detail. This is illustrated in Fig. 2 with dashed circles around the corresponding elements.

Fig. 3 shows a more detailed functional architecture of the data collector 9. The small circles depicted on the right-hand side of the small boxes indicate software interfaces. The data collector 9 splits into three layers 31, 32, 33. The first layer, the protocol layer 31, does the actual collection work. The components of this layer, the DMI collector 22, the SNMP collector 23, the configuration file collector 24 and the WBEM collector 24, use particular protocols (DMI, SNMP, WBEM) and access methods (e.g. SNMP combined with TFTP) to collect information from infrastructure elements. The second layer, the strategies layer 32, contains different collection strategies, for example a sequential collection strategy 34 and a parallel collection strategy 35. Sometimes it is preferable to use a mixed strategy rather than the pure parallel strategy in order not to bother the infrastructure elements with too many requests at a time. For example, with SNMP a restricted parallel strategy can be used which prevents the collector from sending two SNMP requests at the same time to a particular element. However, two or more requests can be sent to different devices in parallel. The corresponding strategy is denoted with 36 in Fig. 3.

The third layer, the basic services layer 33 provides the basic functionality of how to define a collection task. A collection scheduler 37 defines when a collection has to take place. For example, a collection queue could determine that a collection has to be carried out every full hour. A collectible schedule component 38 defines what data have to be collected. A TFTP module 39 provides means to retrieve data via TFTP.

Before any data can be collected, the following definitions of the collection task have to be made:
- what to collect (with a collectible definition),
- when to collect (with a schedule),
- from which infrastructure element to collect (with element information),
- whom to notify when the collection is complete (with a notification object),
- where to deliver the result (with a result object), and
- who defined the task (with an identifier).

The dynamic behavior of the scheduler 9 is illustrated in Fig. 3 by reference signs S1 to S9. In the first steps S1 and S2 the IDT controller 6 defines the following items of the collection task: From which device to collect (IP address of the device), what to collect (definition of collectible) and where to deliver the result (step S1) as well as when to collect (schedule) (step S2). In the next step S3 the IDT controller 6 forwards the collection task to the collector on the protocol layer (here the SNMP collector 23). Then in step, S4, the SNMP collector 23 configures the collection scheduler 37 with the collection task. After step S4 the work is done for the collector 23. In step S5 the collection scheduler 37 fetches the collection schedule from the collectible schedule component 38. The scheduler 37 holds a list of all scheduled collection tasks. If the task is ready for collection (for example, when the point of time when the collection shall be started has been reached) it passes the collection task in step S6 to the strategy layer 32, in the example shown in Fig. 3 to the strategy 36 ("different elements in parallel"). The strategy 36 coordinates the access to the infrastructure elements and initiates the actual collection (step S7). In step S7 the protocol layer (here the SNMP protocol 23) retrieves the data about the infrastructure and returns the result in step S8 to the IDT controller 6.

Fig. 4 shows a detailed functional architecture of the collection configuration component 11 of Fig. 2. The collection configuration component 11 provides information as to what data shall be collected for a given infrastructure element, what is called a "collectible". The infrastructure elements are denoted as "devices" in Fig. 4. Collectible data may be from configuration files, log files, interface tables, routing tables, health parameters, version, patch and update description data, usage, load and performance data etc. The collectible definitions are contained in collectible definition files, here an SNMP collectible definition file 43, a DMI collectible definition file 44, a WBEM collectible definition file (not shown) etc. Device classes are listed in a device-classes file 41. A relation file 42 contains relations between device classes and collectibles. A collection configuration element 45 can retrieve a collectible definition for a given device and a given collection protocol by first accessing the device classes and relation files 41 and 42 in order to find out the correct collectible for the given device, and then the SNMP collectible definition file 43 via a SNMP configuration reader 46 (or the DMI collectible definition file 44 via a DMI configuration reader 47, etc.). The files 41 to 44 are, for example, parsed with TCL (Tool Control Language).

The sequence of a collection configuration task is indicated by reference signs T1 and T2 in Fig. 4: In step T1, the IDT controller 6 requests a collectible for a given device from the collection configuration component 11. The collection configuration element 45 retrieves the collectible in the above-described manner and returns it to the IDT controller 6. In step T2, the IDT controller 6 forwards the configuration task to a protocol specific collector, here an SNMP data collector 48.

Fig. 5 shows a detailed functional architecture of the transport office manager 10a, which is implemented in the customer's IDT 1. A corresponding transport office manager is implemented at the provider's ISST 2, which is indicated by 10b in Fig. 5. The transport office managers 10a, 10b are operating-system independent. It is thus possible to use different operating systems on both sides, for example Windows NT on the one side and UNIX on the other side. The transport office managers 10a, 10b are implemented independently of the transmission protocol and thus can be used for, e.g., HTTP transmission or e-mail transmission. The transport office managers 10a, 10b have two functional parts, a send part and a receive part. Each transport office manager 10a, 10b comprises a transport office manager element 51, which controls the overall function, and a send module 52 and a receive module 53, which are responsible for sending and receiving data. The sending of data from the IDT 1 to the ISST 2 is performed according to the following sequence: In step U1, a file to be sent is provided by the IDT controller 6. In step U2, the IDT controller 6 notifies the transport office manager 10a that the file has to be sent, the manager 10a passes the notification to the send module 52. The send module 52 fetches the file and forwards it to an e-mail sender 54 or a HTTP sender 55 which performs the dispatch of the file.

The receipt of data from the infrastructure support-service tool 2 at the infrastructure documentation tool 1 is performed according to the following sequence: In step U3, the IDT controller 6 registers a call-back interface (depicted by a small circle at step U4). In step U4, the transport office manager element 51 invokes the registered interface. Then, in step U5 the receive module 53 fetches the received file from an e-mail receiver 56 or an HTTP receiver 57 and forwards it to the IDT controller 6 (or the ISST storage device, if the file is received at the support-service provider's site).

Fig. 6 illustrates a hierarchy of different customer infrastructure elements that can be subjected to the disclosed discovery and monitoring process. The hierarchy of these elements forms what is called the distributed application stack of the customer's IT infrastructure 5. It comprises the following elements in hierarchical order: network infrastructure (such as routers and switches), storage system, hardware (such as desktop computers and peripherals (such as printers), operating systems, networking software, database software, middleware and utilities, software applications.

The IT infrastructure 5 including these elements is mapped to a customer's environment model, which also called a "data model", and is stored in the IDT storage component 8 and/or the ISST storage component 14. An example of a graphical representation of an instance of the data model is shown in Fig. 7. The data model is object-oriented and uses an object-oriented database. An object of the data model corresponds to each infrastructure element. Relations between infrastructure elements (i. e. the topology of the infrastructure) are mapped to corresponding relations between the objects, and features of the infrastructure elements which are relevant for the disclosed monitoring process are modeled by class attributes in the data model. The instance shown in Fig. 7 has a tree structure. Depending on the actual IT infrastructures, other topologies, such as graphs, can be modeled.

Examples of detailed data models of individual elements of an IT infrastructure are shown in Figs. 8 to 10: Fig. 8 illustrates the data model of an element of the lowest layer in the application stack, a network node (here: a router 71). A network node is a hardware element which is link to a network, such as a server, a workstation, a printer, a router, a switcher, a gateway, other interconnect devices, etc. Fig. 9 illustrates the data model of another network node, a computer system 72. Fig. 10 illustrates the data model of a storage system 73. The corresponding classes are named "NetworkNode", "ComputerSystem" and "StorageSystem". The relation of "StorageSystem" to "ComputerSystem" of Fig. 9 is included in classes "PhysicalDisk" and "DiskController". A data model of a software application (not shown) can, for example, include the installed version of the software application, patches, updates, to the status of the application, its performance, etc.

Fig. 11 illustrates that the classes shown in Fig. 8 to 10 are inherited from other, more general classes. In particular, as indicated by open arrows, "ComputerSystem" and "StorageSystem" are generalized in to class "System", and "NetworkNode" is generalized to a class "NodeElmt". In turn, these two classes are generalized to a class "ExtensibleObject".

The mapping of the elements of the IT infrastructure 5 to classes is dynamical, which is illustrated in Fig. 12. As most of the classes in the database schema (that is the data model) are derived from ExtensibleObject 62, which in turn is derived from PersistentObject 61, these classes can be dynamically extended at runtime by creating and associating instances of any of the subclasses of Property 63. In particular the preferred embodiment provides for ScalarProperty 64, ArrayProperty 66 and GroupProperty 65. Each ScalarProperty object can store all kinds of scalar values, such as integers with varying precision, floating point numbers with varying precision, strings of virtually arbitrary length or binary data of virtually arbitrary length. Alternatively a ScalarProperty object can also contain a reference to a different object in the same or a different database. This mechanism is also used to dynamically store associations between objects in the database. An ArrayProperty object consists of ScalarProperties objects, which can be accessed using an index. An ArrayProperty is dynamic not only in the size, but also in the number of dimensions it has. For example, in the one dimensional case it represents a vector, in the two dimension case it is a table. A GroupProperty object provides for grouping other Property objects. This means can be used for grouping Properties, for example, information related to a particular network protocol, e.g. UDP, can be put into a single GroupProperty. The information on a different protocol, e.g. TCP can then be put in a second group. As GroupProperty is derived from Property, and as a GroupProperty object groups other Property objects, this also means that a GroupProperty object can contain other GroupProperty objects. In other words, GroupProperty objects can be nested.

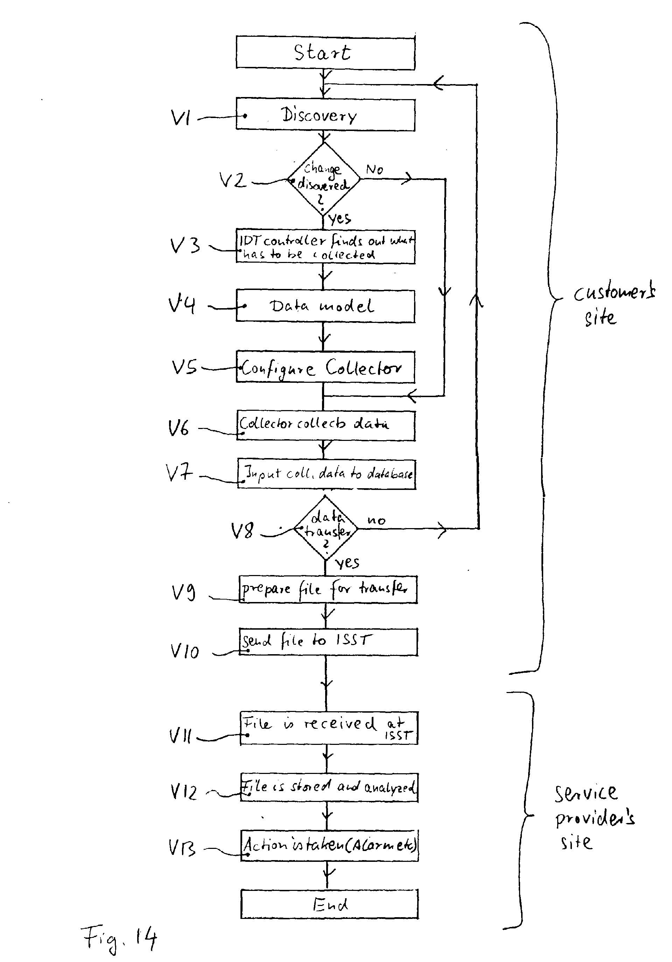

The dynamic extensibility of the databases schema is achieved by the use of meta classes. Such meta classes have attributes which are classes. This is illustrated in the table of Fig. 13: The left-hand column shows the logical level. The lowest level is the Object level, the medium level is the Class level, and the highest level is the Meta level. Commonly, only the Object level and the Class level are used in object-oriented programming. The column in the middle indicates the name of the "concept" used in these levels, namely "Object", "Class" and "MetaClass". The right-hand column shows a concrete example (an instance) of each of these concepts. On the Object level, the shown object is of the type "laserprinter" of the vendor "Hewlett-packard". On the Class level, the shown object is a class "printer" with the attributes "type" and "vendor". On the Meta level, the shown object is "MetaClass" which is a class of classes. Its (meta) attributes are "classname" (here: "printer") and "attributes" (here "type", "vendor"). The implementation of such a meta level allows the instantiation of new classes during runtime, without a change of the database schema.

A preferred embodiment of a remote support-service method carried out with the preferred embodiments of the remote support-service system of Fig. 1 is illustrated in Fig. 14. Steps V1 to V10 are carried out by the IDT 1 at the customer's site, whereas steps V11 to V13 are carried out by the ISST 2 at the support-service provider's site. The method is carried out automatically and periodically as a background task, but can also be executed on demand by the customer or support-service provider.

In step V1, the discovery component 7 performs the discovery task. It discovers changes in the IT infrastructure 5, for example, the appearance of a new infrastructure element or the modification or disappearance of an already existing infrastructure element, including the inter-relation between infrastructure elements (i. e. the infrastructure topology). In step V2, it is ascertained whether a change in the IT infrastructure 5 has been discovered. If the answer is positive, the discovery component 7 informs the IDT controller 6 correspondingly. In step V3, the IDT controller 6 finds out, if a new infrastructure element has been discovered, what that element is and what data have to be collected for it, by consulting the collection configuration component 11. In steps V4 and V5, the IDT controller 6 initiates the mapping of the IT infrastructure into a corresponding data model in the storage component 8, and configures the data collector 9 correspondingly. If the answer in step V2 is negative, the process does not carry out steps V3 to V5, but continues with step V6. In step V6, the collector 9 collects the data to be collected from the infrastructure 5 and returns them to the IDT controller 6. In step V7, the IDT controller 6 inputs the collected data into the storage component 8. In step V8, the IDT controller 6 decides whether the data are to be transferred to the ISST 2. If the answer is negative, the flow returns to step V1. If the answer is positive, in step V9 the IDT controller 6 prepares a data file to be transferred. In some embodiments, the data preparation step V9 includes a consolidation of the data to be transferred. In step V10, the IDT controller 6 instructs the transport office manager 10a to send the prepared file to the ISST 2. The steps V1 to V8 are carried out in a permanent loop, depending on a collection schedule in step V6 (for example, every full hour). The decision that data are to be transferred to the ISST in step V8 can be taken depending on the result of the collection in step V6. For example, the data transfer may periodically be carried out at greater time intervals than the collection period, if no (or no relevant) change has been found in the discovery and data collection, but is carried out immediately if such a change has been detected.

The remaining steps V11 to V13 are performed out at the support-service provider's site. In step V11, the file sent from the customer's site is received. In step V12, the file is stored in the ISST storage component 14 and analyzed by the analysis component 16. In step V13, actions are taken depending on the results of the analysis. A standard action is, for example the provision of a status report. If faults, malfunctions, outdated software versions etc. have been detected, the corresponding action may be the triggering of an alarm, the instructing of service personnel, the triggering of a software update action etc.

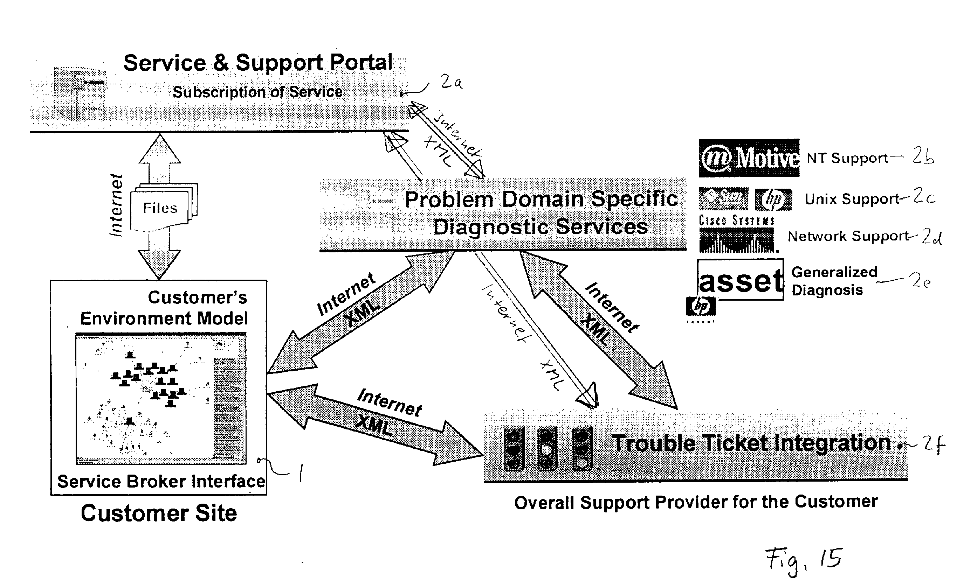

Fig. 15 illustrates an embodiment wherein the support service is provided by several co-operating sub-services which may be located at different sites, namely a service and support portal 2a, several problem-domain-specific diagnostic services 2b to 2e and an overall support provider 2f. The customer communicates with the services and support portal 2a in order to subscribe to a support service. The particular service can be individually tailored to the particular customer's IT infrastructure 5 and the customer's specific needs (for example, his specific security requirements).

The problem-domain-specific diagnostic services 2b to 2e are specialized to provide support for specific parts of the customer's IT infrastructure 5. They are, for example, a NT support-service tool 2b, an UNIX support-service tool 2c, a network support-service tool 2d and generalized diagnosis support-service tool 2e. The customer's IDT 1 is equipped with a data distribution component (not shown) which knows what data are relevant for which one of the problem domains specific diagnostic services 2b to 2e, and groups and addresses the data to be transferred to the corresponding one of the services 2b to 2e.

In addition, the IDT 1 keeps the overall support provider 2f informed about any data transfer to the services 2a to 2e by transferring corresponding notifications to it. The results obtained by the data analysis carried out by the problem-domain-specific diagnostic services 2b to 2e are transferred directly to the overall support provider 2f.

The overall support provider 2f collects the results from the services 2b to 2e, sends overall reports and alarms to the customer 1 (which are called "Trouble Tickets" in Fig. 15) and provides an overall monitoring facility for the customer 1 and the co-operating sub-services 2a to 2f via IP links. The messaging can be based on XML.

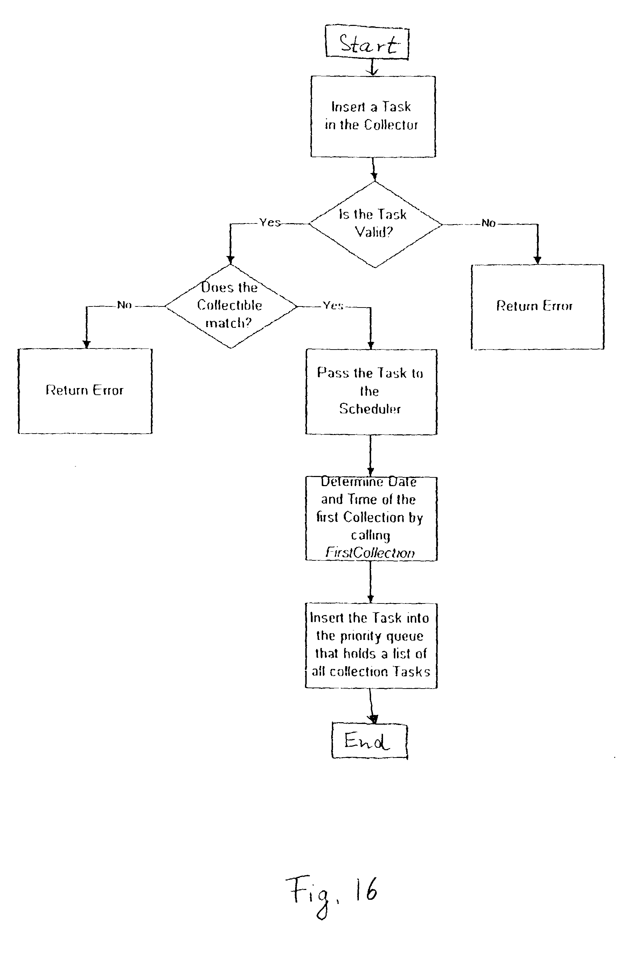

Fig. 16 describes steps S1 to S5 of Fig. 3 in detail. The collection is a two-step process. In the first step, a client application (i.e. the NDT controller 6) configures a collection task and passes the task to the collector. Fig. 6 shows what happens when a new collectible is inserted by the client, i.e. the procedural steps during insertion of a new task.

When the client application adds a new task to the collector, the collector checks whether the collection task is valid. In this embodiment, validity means that the task has configured the following attributes:
- A schedule;
- A valid collectible definition;
- Device information that contains the IP address and other access parameters for the collectible;
- A non-null session identification that defines the application that defined the task.

If the task is not valid, it is rejected with an error message. The next step is to check whether the collectible definition matches the collector, e.g. that the SNMP collector gets only SNMP collectible definitions and not DMI collectibles. The task is rejected when the collectible does not match the collector. In the positive case the collector forwards the task to its scheduler. The scheduler determines the date and time of the first collection and inserts the task into its queue.

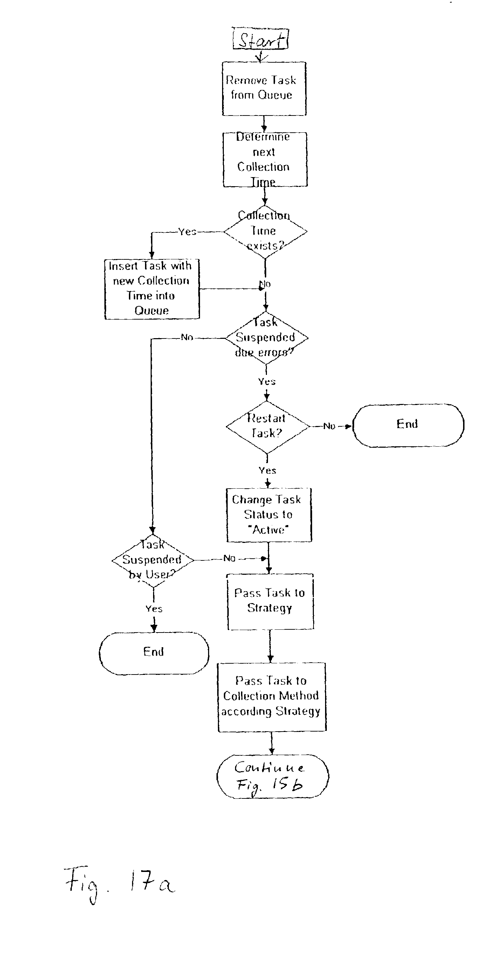

Fig. 17 describes steps S6 to S8 of Fig. 3 in detail. The scheduler has an internal priority queue that holds a list of all collection tasks sorted by time. When a collection task is ready, the steps shown in the flowchart depicted in Fig. 17a, which is the first part of an entire flow chart continued in Fig. 17b, are executed. It is noteworthy that the tasks are executed for every collection task that has to be performed. Fig. 17 particularly shows an exemplary scheduling (a) and applying strategy (b) by means of a task execution process flowchart.

At the beginning, the scheduler removes the task from the priority queue and determines the next collection time. Sometimes there will be no next collection time, e.g. in the case of a collect once schedule. If there is a collection time, the scheduler will insert the task with the new collection time again. Otherwise the task will not be inserted into the queue and therefore not handled again (i.e. collect once).

The next step checks whether the task should be forwarded to a corresponding strategy. If the task was suspended due to repeated errors, the scheduler will check whether to restart the task again. If it should be disabled, the task is finished. Otherwise the scheduler will change the status of the task to 'active' and pass the task to the strategy. If the task was not suspended due to errors, it may be suspended at this point. Otherwise the task will be forwarded to the corresponding strategy.

The strategy holds a list of all collection tasks that have to be performed as fast as possible and passes the tasks, in accordance with the strategy, to the respective collection method. The collection method tries to retrieve the collectible. If the collection succeeds, a retry counter is reset which is used for suspending tasks that resulted in several repeated errors. Further it delivers the result and notifies it to the client if applicable. If the collection fails, the strategy increments the retry counter. The task is when the counter reaches a maximum.

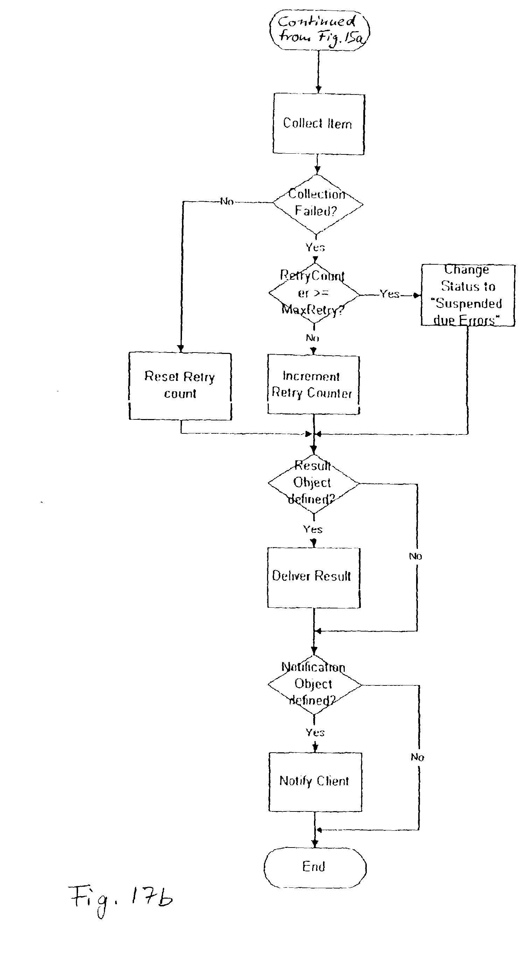

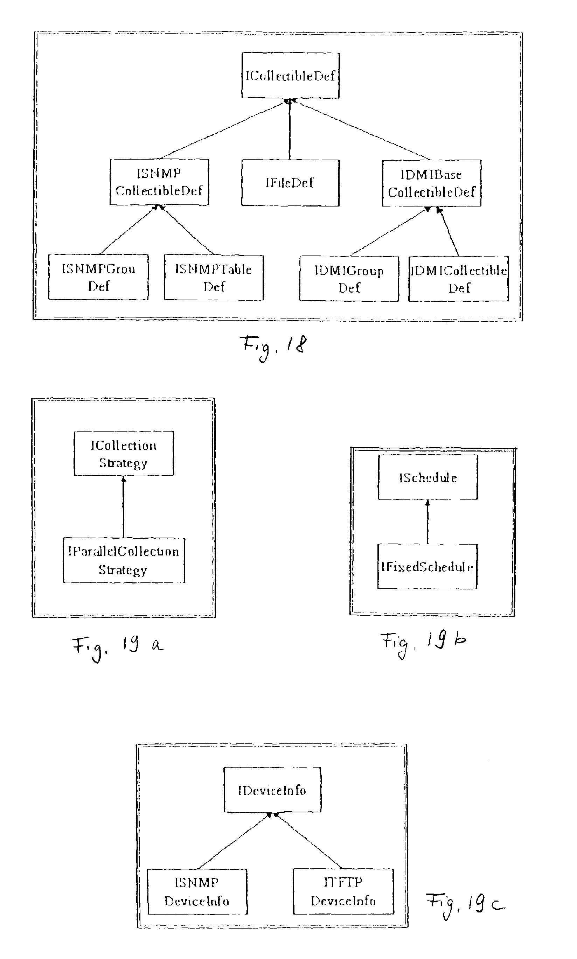

Figs. 18 and 19 a-c show interfaces and their hierarchies. Fig. 18 shows interfaces for collectible definitions. Common to all collectible definitions is a 'name' and a 'unique identifier'. Protocol specific information is provided by derived protocol specific interfaces. For instance, the interfaces 'ISNMPCollectibleDef' define items that can be retrieved via SNMP.

Referring now to Fig. 19a, strategies are used to control access to a device. The base interface 'IcollectionStrategy' consists of two methods. The method 'CollectionMethod' sets the collection method that is used in conjunction with that strategy. The collection method is preferably part of the protocol. The interface 'IparallelCollectionStrategy' is an inherited interface from 'IcollectionStrategy'. It has additional methods to set the maximum number of threads and to retrieve the number of currently active threads.

Now referring to Fig. 19b, the first group of interfaces defines collection schedules. The collection schedules are used by the scheduler in order to find out when to perform a collection task. The interface basically provides two methods. One returns the date for the 'first' collection and the second method returns the date of the 'next' collection.

Referring to Fig. 19c, a family of device information interfaces define how to access a device. The basic interface contains only the network address of the device. Protocol specific information like SNMP community strings, retry and timeouts are defined in protocol dependent interfaces. It is noted that the device information is protocol dependent. For example, an SNMP collection task needs the SNMP community strings. These strings are not provided by the base interface 'IDevicelnfo'. In order to define SNMP collection tasks, the interface 'ISNMPDevicelnfo' is to be used. This interface is derived from the interface 'IDevicelnfo' and extended by commonly known methods (algorithms) to retrieve and set the community strings.

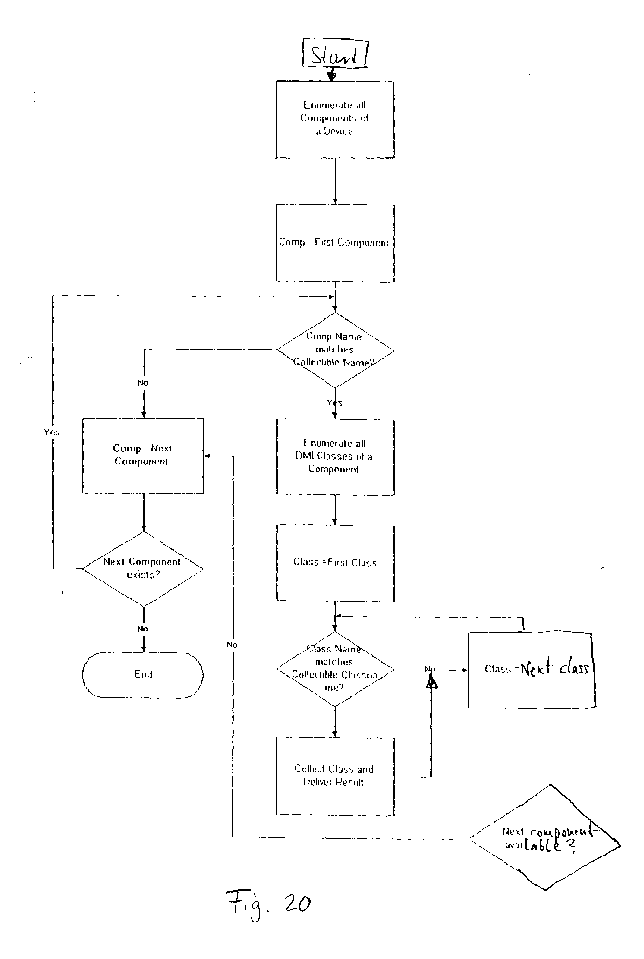

Finally, Fig. 20 shows the DMI collector 22 of Figs. 2 and 3 and a corresponding algorithm in greater detail. The DMI collector retrieves arbitrary DMI groups and DMI tables. A DMI collectible is defined by the above described interface IDMICollectibleDef'. A DMI collectible is particularly defined by the following attributes:
- The component name;
- The class name for the DMI group or table;
- A list of IDs.

The DMI collector performs the following steps for each collectible:
- Enumerate all components for a device
- For each component that matches the component name in the collectible definition:
   - Enumerate all DMI classes in the component;
   - For each class that matches the class name in the collectible definition:
      - Collect the item and return the result.

Thus, a general purpose of the disclosed embodiments is to provide an improved system, computer program product and a method for providing a remote support service.

All publications and existing systems mentioned in this specification are herein incorporated by reference.

Although certain systems, methods and products constructed in accordance with the teachings of the invention have been described herein, the scope of coverage of this patent is not limited thereto. On the contrary, this patent covers all embodiments of the teachings of the invention fairly falling within the scope of the appended claims either literally or under the doctrine of equivalents.

## Claims

1. A system for providing a remote support service between at least one support-service provider's site and a customer's site having a customer's information technological (IT) infrastructure, comprising:
an information collecting component which collects information about the customer's IT infrastructure;
a storage component which stores collected information according to a data model modeling at least part of the customer's IT infrastructure;
an information-transferring component capable of transferring at least part of the collected or stored information or a representation of it to the support-service provider;
an analysis component which analyzes the stored or transferred information or representation as a basis for the provision of the remote support services.

2. The system of claim 1, wherein the storage component is located at least at one of the customer's site and the support-service provider's site.

3. The system of claim 1 or 2, wherein the analysis component is located at least at one of the customer's site and the support-service provider's site.

4. The system of any one of claims 1 to 3, further comprising a consolidator component which is capable of generating a consolidated representation of the collected or stored information, said consolidator component is located at least at one of the customer's site and the support-service provider's site.

5. The system of any one of claims 1 to 4, wherein the customer's IT infrastructure comprises at least one of the following elements: network infrastructure elements, storage systems, hardware elements and peripherals, operating systems, networking software, database software, middleware and utilities, software applications; and wherein the information collecting component collects information about at least one of these elements and the data model models at least part of these elements and their inter-relations.

6. The system of any one of claims 1 to 5, further comprising a discovery component capable of automatically discovering changes in the customer's IT infrastructure, and wherein the data model is automatically adapted so that it models the changed IT infrastructure.

7. The system of claim 6, wherein, due to the automatic discovering capability of the discovery component, after an installation of a program code representing the software parts of the information collecting component, the storage component and the information-transferring component at the customer's site, the system automatically discovers at least part of the customer's IT infrastructure and automatically generates a data model which models it.

8. The system of any one of claims 1 to 7, wherein, in the database component, the elements of the customer's IT infrastructure are mapped to classes, and wherein new classes can dynamically be added, and wherein the classes have flexible attributes which can be dynamically added and changed.

9. The system of any one of claims 1 to 8, wherein the information-transferring component is capable of transferring the collected or stored information or a representation of it via an information network, particularly the Internet, to the support-service provider, or by means of a data carrier.

10. The system of any one of claims 1 to 9, wherein the database component stores at least one of configuration and performance history information of the customer's IT infrastructure.

11. The system of any one of claims 1 to 10, wherein the analysis component monitors or analyzes at least on of configuration, configuration changes, performance and performance changes of the customer's IT infrastructure.

12. The system of any one of claims 1 to 11, wherein the information collecting component comprises a scheduler which schedules the collection of the information about the customer's IT infrastructure.

13. The system of any one of claims 1 to 12, wherein the collection strategy or schedule is determined individually for the customers, depending on the particular support service contract between the customer and the support-service provider.

14. A computer system forming a customer based part of a system for providing a remote support service between at least one support-service provider's site and the customer's site having a customer's information technological (IT) infrastructure, comprising:
an information collecting component which collects information about the customer's IT infrastructure;
a storage component which stores collected information according to a data model modeling at least part of the customer's IT infrastructure;
an information-transferring component capable of transferring at least part of the collected or stored information or of a consolidated representation of it to the support-service provider.

15. The computer system of claim 14, having one or more features of any one of claims 1 to 13.

16. A computer program product including program code for execution on a customer-based computer system which is part of a system for providing a remote support service between at least one support-service provider's site and the customer's site having a customer's information technological (IT) infrastructure, said program code comprising software parts of:
an information collecting component which collects information about the customer's IT infrastructure;
a storage component which stores collected information according to a data model modeling at least part of the customer's IT infrastructure;
an information-transferring component capable of transferring at least part of the collected or stored information or of a consolidated representation of it to the support-service provider.

17. The computer program product of claim 16, having one or more features of any one of claims 1 to 13.

18. A method for providing a remote support service between at least one support-service provider's site and a customer's site having a customer's information technological (IT) infrastructure, comprising the steps of:
collecting information about the customer's IT infrastructure;
storing collected information according to a data model modeling at least part of the customer's IT infrastructure;
transferring at least part of the collected or stored information or a representation of it to the support-service provider;
analyzing the stored or transferred information or representation as a basis for the provision of the remote support services.

19. The method of claim 18, having one or more features of any one of claims 1 to 13.
